# EUROPEAN PATENT APPLICATION

(11) **EP 3 474 054 A1**
(43) Date of publication of application: **24.04.2019**
(21) Application number: 18201202.1
(22) Date of filing: 18.10.2018
(51) Int. Cl.: G02B 6/44

(54) **FIBER OPTIC CLOSURE AND FIBER OPTIC NETWORK DISTRIBUTION SYSTEM**

(30) Priority: 18.10.2017 WO PCT/CN2017/106752
(71) Applicant: Huawei Technologies Co., Ltd., Shenzhen, Guangdong 518129 (CN)
(72) Inventor: PEI, Guohua, Shenzhen, Guangdong 518129 (CN); YANG, Anliang, Shenzhen, Guangdong 518129 (CN); XIONG, Wei, Shenzhen, Guangdong 518129 (CN)
(74) Representative: Isarpatent

(57) **Abstract**

Embodiments of this application relate to the field of fiber optic network technologies and provide a fiber optic closure and a fiber optic network distribution system. The fiber optic closure includes a mounting support, an enclosure, and a lock assembly. The mounting support includes a base plate and a mounting substrate fastened on a side of the base plate, and a splice tray is disposed on the mounting substrate. An accommodation cavity is formed in the enclosure, an opening is disposed on an end of the enclosure, the mounting substrate stretches into the accommodation cavity of the enclosure through the opening of the enclosure, and the base plate seals the opening of the enclosure. The lock assembly includes a rotating handle and a lock shaft, and a clamping groove is disposed on the rotating handle. The rotating handle is hinged to the enclosure, and the lock shaft is fastened on the base plate. When the rotating handle is rotated to a lock location, the clamping groove of the rotating handle is clamped to the lock shaft, so as to prevent the enclosure detaching from the base plate.

## Description

### TECHNICAL FIELD

This application relates to the field of fiber optic network technologies, and in particular, to a fiber optic closure and a fiber optic network distribution system.

### BACKGROUND

An optical fiber is short for a light-guide fiber. Fiber optic communication is a communication mode in which an optical wave is used as an information carrier and an optical fiber is used as a transmission medium. Because the fiber optic communication has advantages such as a large capacity, long-distance transmission, and anti-electromagnetic interference, the fiber optic communication better meets requirements of communications technologies on a great amount of information and high precision, and the transmission medium, that is, the optical fiber can be widely promoted because a price of the fiber optic communication is low. Currently, a fiber optic network has gradually been used in households, that is, FTTH (Fiber To The Home, fiber to the home). As an important connection device for connecting a user and a network in an FTTH project, a fiber optic closure is increasingly widely applied to an FTTH technology.

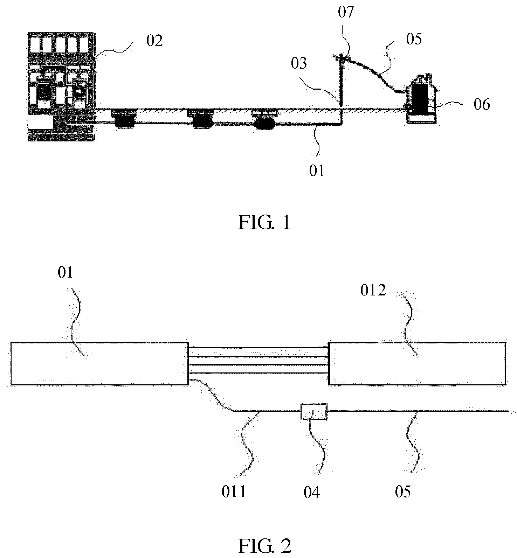

A fiber optic network architecture is shown in FIG. 1. When a feeder cable 01 is led out from a central equipment room 02 and reaches a connectorised fiber distribution point 03 adjacent to a user, as shown in FIG. 2, some optical fibers are separated from the feeder cable 01 to serve as branching optical fibers 011, and a remaining optical fiber serves as a straight-through optical fiber 012. The branching optical fiber 011 usually needs a connector 04 to connect a drop fiber 05, so as to implement optical fiber connection. As shown in FIG. 1, another end of the drop fiber 05 is connected to a customer terminal box 06 to implement the fiber to the home. To ensure that the connector 04 is not affected by an environment and can reliably operate for a long time, the optical fiber connector 04 is usually placed into a fiber optic closure 07 for protection. The fiber optic closure protects the optical fiber or the connector, and implements functions such as water-proofing and dust-proofing, resistance to impact of external force and pollution from liquid chemicals, and avoidance of ultraviolet radiation.

### SUMMARY

Embodiments of this application provide a fiber optic closure and a fiber optic network distribution system, so as to implement a tool-less operation, so that an opening operation and a closing operation of the fiber optic closure are simple and construction efficiency is high.

To achieve the foregoing objective, the embodiments of this application use the following technical solutions.

According to a first aspect, this application provides a fiber optic closure, including:
a mounting support, where the mounting support includes a base plate and a mounting substrate fastened on a side of the base plate, and a splice tray is disposed on the mounting substrate;
an enclosure, where an accommodation cavity is formed in the enclosure, an opening is disposed on an end of the enclosure, the mounting substrate stretches into the accommodation cavity of the enclosure through the opening of the enclosure, and the base plate seals the opening of the enclosure; and
a lock assembly, where the lock assembly includes a rotating handle and a lock shaft, and a clamping groove is disposed on the rotating handle; where
the rotating handle is hinged to the enclosure, and the lock shaft is fastened on the base plate; or the rotating handle is hinged to the base plate, and the lock shaft is fastened on the enclosure; and
when the rotating handle is rotated to a lock location, the clamping groove of the rotating handle is clamped to the lock shaft, so as to prevent the enclosure detaching from the base plate.

In the fiber optic closure provided in this embodiment of this application, because the lock assembly uses a structure including the rotating handle and the lock shaft, when the fiber optic closure needs to be opened, it is only necessary to rotate the rotating handle along an opening direction. In a rotating process of the rotating handle, the clamping groove of the rotating handle is detached from the lock shaft to implement unlocking, and then the mounting support is detached from the enclosure. When the fiber optic closure needs to be closed, the mounting substrate of the mounting support is first inserted into the accommodation cavity of the enclosure through the opening of the enclosure, then the base plate is snapped to fit the opening of the enclosure, and the rotating handle is rotated along a closing direction, so that the clamping groove of the rotating handle is clamped to the lock shaft, so as to lock the mounting support and the enclosure. In this embodiment of this application, the fiber optic closure has a simple structure and fewer parts, and an opening operation and a closing operation may be implemented by only rotating the rotating handle, without a need of any auxiliary tool. The operations are simple and construction efficiency is high.

In a possible implementation, a locating protrusion is disposed in the clamping groove, and when the rotating handle is at the lock location, the locating protrusion is located between an opening of the clamping groove and the lock shaft, so as to prevent the lock shaft detaching from the clamping groove. Therefore, it may be ensured that the lock shaft and the clamping groove are more stably fastened, so as to prevent the lock shaft detaching from the clamping groove when the fiber optic closure vibrates.

In a possible implementation, a smooth circular arc-shaped chamfer is formed at the opening of the clamping groove, so as to reduce friction and conveniently guide the lock shaft to the clamping groove.

In a possible implementation, the opening of the clamping groove may be a flaring-shaped structure, so as to help the lock shaft enter the clamping groove.

In a possible implementation, the clamping groove may be a circular arc-shaped groove, and a center of the circular arc-shaped groove may overlap a rotation center of the rotating handle, or the center of the circular arc-shaped groove and the rotation center of the rotating handle may be staggered.

In a possible implementation, a side wall of the base plate and an inner wall at the opening of the enclosure are connected in a sealed manner, so as to seal the opening of the enclosure. Therefore, the side wall of the base plate and the opening of the enclosure may be sealed through interference fitting between the opening of the enclosure and the side wall of the base plate, so that sealing force is more evenly distributed.

In a possible implementation, a sealing ring is disposed between the side wall of the base plate and the inner wall at the opening of the enclosure, and the sealing ring is in sealed contact with the side wall of the base plate and the inner wall at the opening of the enclosure. Therefore, the opening of the enclosure and the side wall of the base plate may be more tightly sealed by disposing the sealing ring, so as to implement a relatively high protection level for the fiber optic closure and meet a relatively high protection requirement, so that the fiber optic closure can be used in a harsh environment such as a manhole.

In a possible implementation, the sealing ring is an annular sealing ring.

In a possible implementation, a locating groove for fastening the sealing ring is disposed on the side wall of the base plate. Therefore, the sealing ring can be conveniently located, and the sealing ring can be prevented from falling off because of squeeze in an opening process and a closing process of the fiber optic closure.

In another possible implementation, a locating groove for fastening the sealing ring is disposed on the inner wall at the opening of the enclosure.

In a possible implementation, the locating groove is a ring-shaped groove.

In a possible implementation, two ends of the rotating handle are respectively hinged to two sides of the enclosure, clamping grooves are respectively disposed on the two ends of the rotating handle, two lock shafts are respectively disposed at locations that are on the base plate and that are corresponding to the two clamping grooves, and when the rotating handle is rotated to the lock location, the clamping grooves on the two ends of the rotating handle are respectively clamped to the two lock shafts in a one-to-one correspondence. Therefore, both the two ends of the rotating handle may apply lock force, so that lock force between the mounting support and the enclosure is more evenly distributed, so as to avoid that sealing is not tight because force is applied to a local area.

In a possible implementation, the opening of the enclosure may face downward, the base plate is snapped upward to fit the opening of the enclosure, and the rotating handle is at a side part of the enclosure. After the rotating handle is rotated downward a preset angle, the clamping groove fits the lock shaft.

In a possible implementation, a bobweight part is disposed on the rotating handle, and weight of the bobweight part can apply downward rotating force to the rotating handle.

In a possible implementation, a guiding assembly is further disposed between the base plate and the enclosure, the guiding assembly includes a first guiding part and a second guiding part, the first guiding part is disposed on the opening end of the enclosure, the second guiding part is disposed on an edge of the base plate, and when the first guiding part fits the second guiding part, the base plate may be guided to snap and fit the opening of the enclosure in a sealed manner. Therefore, when the base plate is snapped to fit the enclosure, the first guiding part may first fit the second guiding part, and then the base plate is snapped to fit the enclosure at the correct location with the guidance of the first guiding part and the second guiding part, so as to avoid that sealing is not tight because the base plate tilts or is dislocated after snap-fitting is performed.

In a possible implementation, the first guiding part is a guiding column, and the second guiding part is a guiding opening; and a location of the guiding column is corresponding to that of the guiding opening, and both the guiding column and the guiding opening extend along a snap-fit direction of the base plate and the enclosure.

In another possible implementation, the first guiding part is a guiding opening, the second guiding part is a guiding column, and both the guiding opening and the guiding column extend along a snap-fit direction of the base plate and the enclosure. Therefore, the base plate may be guided to a correct snap-fit location through fitting and plug-connection of the guiding column and the guiding opening.

In a possible implementation, there are a plurality of first guiding parts and a plurality of second guiding parts, the plurality of first guiding parts and the plurality of second guiding parts are disposed in a one-to-one correspondence, the plurality of first guiding parts are evenly distributed on the inner wall at the opening of the enclosure, and the plurality of second guiding parts are evenly distributed on the edge of the base plate. Therefore, a guiding force may be more evenly distributed, so that the base plate is prevented from tilting in a guiding process, and a snap-fit process of the base plate is more stable. In addition, after the base plate is snapped to fit the enclosure, the guiding assembly helps enhance strength of the opening of the enclosure, so as to avoid deformation of the opening of the enclosure.

In a possible implementation, a flange is disposed on a periphery of the base plate, and an end face of the opening end of the enclosure abuts against the flange. The flange may locate the base plate along a snap-fit direction of the base plate, so as to avoid a case in which it is difficult to remove the base plate because the base plate is deeply inserted into the enclosure.

In a possible implementation, an optical fiber connection hole is disposed on the base plate, the optical fiber connection hole is configured to connect an optical fiber, and a detachable stopper is disposed to seal an optical fiber connection hole through which no optical fiber is connected. Therefore, an unused optical fiber connection hole may be blocked, so as to prevent an external environment affecting an optical fiber connector and an optical fiber inside the fiber optic closure. When a new optical fiber needs to be connected, the optical fiber can be connected after the stopper is detached.

In a possible implementation, a plastic stopper or a rubber stopper is used to fit an "O-shaped" sealing ring, so as to block the optical fiber connection hole, thereby implementing a waterproof effect.

In a possible implementation, when an optical fiber is connected, a tool-less connector is inserted into the optical fiber connection hole. The tool-less connector is an apparatus accessory that can rapidly fasten and seal the optical fiber in the optical fiber connection hole of the base plate. Therefore, the optical fiber in the optical fiber connection hole may be rapidly fastened and sealed, so as to facilitate operating and significantly improve construction efficiency. In addition, sealing reliability is substantially improved, and single cable management of the optical fiber is implemented, so that a later added optical fiber does not affect an in-service optical fiber.

In a possible implementation, optical fiber connection holes include an optical fiber connection hole that can simultaneously accommodate two optical fibers, and an optical fiber connection hole that can accommodate one optical fiber. The optical fiber connection hole that can simultaneously accommodate two optical fibers may be configured to connect a straight-through optical fiber, and the optical fiber connection hole that can accommodate one optical fiber may be configured to connect a branching optical fiber or a drop fiber.

In a possible implementation, the optical fiber connection hole that can simultaneously accommodate two optical fibers is an oval hole or a runway-shaped hole. The optical fiber connection hole that can accommodate one optical fiber is a round hole.

In a possible implementation, the splice tray is disposed on a first surface of the mounting substrate, an optical fiber guiding groove is further disposed on the first surface of the mounting substrate, and the optical fiber guiding groove is configured to guide, to the splice tray, the optical fiber connected through the optical fiber connection hole. The optical fiber guiding groove can guide the optical fiber to the splice tray to perform a storage operation and a fusion splice operation. The optical fibers may be neatly arranged, so as to prevent a plurality of optical fibers intertwining.

In a possible implementation, an elastic lock block is disposed on the optical fiber guiding groove, and the elastic lock block is configured to tightly press and locate the optical fiber in the optical fiber guiding groove.

In a possible implementation, the elastic lock block is disposed on an initial part of the optical fiber guiding groove, that is, a part close to the optical fiber connection hole.

In a possible implementation, a mounting column is disposed at a location that is on the first surface of the mounting substrate and that is corresponding to the optical fiber guiding groove, a limiting inverse hook is disposed on the mounting column, and the elastic lock block is disposed on the mounting column and is located between the limiting inverse hook and the first surface of the mounting substrate. Therefore, the elastic lock block may be limited and pressure is applied to the elastic lock block, so that the elastic lock block is deformed, thereby tightly pressing the optical fiber in the optical fiber guiding groove. A volume of the structure is small and the structure is easy to operate, and another mounting accessory for binding the optical fiber is not required, for example, a fiber-through ring.

In a possible implementation, an optical fiber storage cavity is disposed on a second surface of the mounting substrate, a blocking tooth for preventing an optical fiber falling off is disposed at an opening of the optical fiber storage cavity, and the second surface of the mounting substrate is opposite to the surface that is of the mounting substrate and on which the splice tray is disposed. Therefore, the straight-through optical fiber may be stored in the optical fiber storage cavity, and because the optical fiber storage cavity and the splice tray are respectively disposed on two opposite surfaces of the mounting substrate, arrangement space may be saved.

In a possible implementation, the splice tray is hinged to the mounting substrate, the splice tray is connected to a self-lock structure, and when the splice tray is rotated to a preset location, the self-lock structure may hold the splice tray at the preset location. Therefore, construction operations may be simultaneously performed on two opposite surfaces of the splice tray.

In a possible implementation, a plurality of splice trays are hinged to the first surface of the mounting substrate, and the plurality of splice trays are stacked. The splice tray may accommodate and manage an optical fiber that enters the splice tray, and protect a fiber splice point.

In a possible implementation, eight splice trays are hinged to the first surface of the mounting substrate.

In a possible implementation, when the splice tray is rotated to a location at which an included angle between the splice tray and the mounting substrate is 90°, a self-lock structure locks the splice tray.

In a possible implementation, the self-lock structure includes a protrusion disposed on a hinged shaft of the splice tray, and an elastic hook disposed on the mounting substrate, and when the splice tray is rotated to the preset location, the protrusion is clamped to the elastic hook, so as to apply holding force to the splice tray. The structure is simple and easy to implement.

In a possible implementation, the side wall of the base plate fits the inner wall at the opening of the enclosure through slope fitting. Because the handle may apply lock force to the lock shaft along an insertion direction of the mounting substrate, slope fitting may convert a part of the lock force into sealing force perpendicular to a fitting surface, so that the opening of the enclosure more tightly fits the side wall of the base plate, and sufficient squeezing force can be applied to the sealing ring when the sealing ring is disposed.

In a possible implementation, the base plate and the mounting substrate are integrated. Therefore, it is difficult to detach the base plate from the mounting substrate, and an overall structure is more stable.

In a possible implementation, the base plate and the mounting substrate are detachably connected. Therefore, the base plate may be easily replaced with a different model of base plate, so as to meet a different construction requirement.

In a possible implementation, the mounting substrate is perpendicular to the base plate.

According to a second aspect, this application provides a fiber optic network distribution system, including a branching optical fiber, a drop fiber, and a fiber optic closure according to any one of the foregoing technical solutions. The branching optical fiber and the drop fiber are connected by using an optical fiber connector, and the optical fiber connector is disposed in the fiber optic closure.

In the fiber optic network distribution system provided in the embodiments of this application, the optical fiber connector is placed into the fiber optic closure for protection, and the fiber optic closure can implement functions such as water-proofing and dust-proofing, resistance to impact of external force and pollution from liquid chemicals, and avoidance of ultraviolet radiation, so that the optical fiber connector can reliably work for a long time without being affected by an environment. In addition, opening and closing of the fiber optic closure may be implemented by only rotating a rotating handle of the fiber optic closure, without a need of any auxiliary tool. An operation is simple and construction efficiency is high.

### BRIEF DESCRIPTION OF DRAWINGS

FIG. 1 is a schematic diagram of a fiber optic network architecture;
FIG. 2 is a schematic structural diagram of optical fiber connection and distribution;
FIG. 3 is a schematic diagram of an exploded structure of a fiber optic closure according to an embodiment of this application;
FIG. 4 is a schematic structural diagram of unlocking of a lock structure in a fiber optic closure according to an embodiment of this application;
FIG. 5 is a schematic structural diagram of locking of a lock structure in a fiber optic closure according to an embodiment of this application;
FIG. 6 is a main view of a rotating handle in a fiber optic closure according to an embodiment of this application;
FIG. 7 is a left view of FIG. 6;
FIG. 8 is a top view of FIG. 6;
FIG. 9 is a diagram of a three-dimensional structure of a rotating handle in a fiber optic closure according to an embodiment of this application;
FIG. 10 is a schematic diagram of an exploded structure of a fiber optic closure according to an embodiment of this application;
FIG. 11 is a main view of a base plate in a fiber optic closure according to an embodiment of this application;
FIG. 12 is a left view of FIG. 11;
FIG. 13 is a main view of an enclosure in a fiber optic closure according to an embodiment of this application;
FIG. 14 is a top view of FIG. 11;
FIG. 15 is a diagram of a three-dimensional structure of a base plate in a fiber optic closure according to an embodiment of this application;
FIG. 16 is a schematic structural diagram of a mounting support in a fiber optic closure according to an embodiment of this application;
FIG. 17 is a schematic structural diagram of a base plate that is in a fiber optic closure and on which a tool-less plug is installed according to an embodiment of this application;
FIG. 18 is a schematic structural diagram of a mounting support that is in a fiber optic closure and on which a splice tray is removed according to an embodiment of this application;
FIG. 19 is a schematic structural diagram of an elastic lock block in a fiber optic closure according to an embodiment of this application;
FIG. 20 is a schematic structural diagram of an optical fiber storage cavity in a fiber optic closure according to an embodiment of this application;
FIG. 21 is a vertical cross section chart of a fiber optic closure according to an embodiment of this application;
FIG. 22 is a schematic diagram of a location of a protrusion on a rotating shaft of a splice tray in a fiber optic closure according to an embodiment of this application;
FIG. 23 is a schematic diagram of a location of an elastic hook on a mounting substrate in a fiber optic closure according to an embodiment of this application;
FIG. 24 is a schematic structural diagram showing that a splice tray in a fiber optic closure is rotated 90° according to an embodiment of this application;
FIG. 25 is a right view of FIG. 24;
FIG. 26 is a schematic structural diagram showing that four relatively thick splice trays are disposed in a fiber optic closure according to an embodiment of this application; and
FIG. 27 is a schematic structural diagram showing that eight relatively thin splice trays are disposed in a fiber optic closure according to an embodiment of this application.

### DESCRIPTION OF EMBODIMENTS

Embodiments of this application relate to a fiber optic closure and a fiber optic network distribution system. In a laying process of drop cables of a fiber optic network architecture, a large quantity of optical fibers in a feeder cable are laid toward a region in which a plurality of customers are located. At a location adjacent to the customer, some optical fibers are separated from the feeder cable to serve as branching optical fibers, and a remaining optical fiber serves as a straight-through optical fiber. The branching optical fiber usually needs a connector to connect the drop fiber, so as to implement optical fiber connection. To ensure that the connector is not affected by an environment and can reliably operate for a long time, the optical fiber connector is usually placed into the fiber optic closure for protection. The fiber optic closure can protect the optical fiber or the connector, and implement functions such as water-proofing and dust-proofing, resistance to impact of external force and pollution from liquid chemicals, and avoidance of ultraviolet radiation.

The fiber optic closure includes a box cover and a box bottom that are detachably connected, and the box cover and the box bottom are connected and fastened by using a screw. A closed cavity is formed after the box cover and the box bottom are connected, and the closed cavity is configured to dispose the connector of the optical fiber. Because the fiber optic closure needs to be opened and closed to connect a new optical fiber each time, the fiber optic closure is opened and closed frequently. It is found that the solution has the following disadvantages: because the box cover and the box bottom are connected by using a screw, a tool such as a screwdriver is required to open and close the fiber optic closure each time, and an operation is complex. In addition, small parts such as the screw, a washer, and a nut are easy to be lost in an operation process, and consequently, construction efficiency is affected.

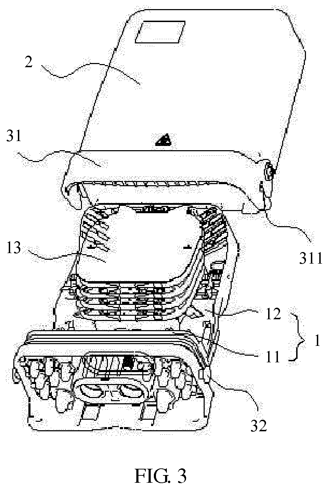

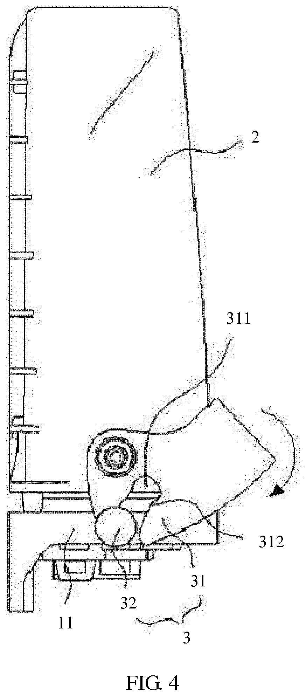

To resolve the foregoing problem, an embodiment of this application provides a structure design solution for a fiber optic closure. As shown in FIG. 3 to FIG. 5, the fiber optic closure in this embodiment of this application includes a mounting support 1, an enclosure 2, and a lock assembly 3. The mounting support 1 includes a base plate 11 and a mounting substrate 12 fastened on a side of the base plate 11, and a splice tray 13 is disposed on the mounting substrate 12. An accommodation cavity is formed in the enclosure 2, an opening 21 is disposed on an end of the enclosure 2, the mounting substrate 12 stretches into the accommodation cavity of the enclosure 2 through the opening 21 of the enclosure 2, and the base plate 11 seals the opening 21 of the enclosure 2. The lock assembly 3 includes a rotating handle 31 and a lock shaft 32, and a clamping groove 311 is disposed on the rotating handle 31. The rotating handle 31 is hinged to the enclosure 2, and the lock shaft 32 is fastened on the base plate 11. When the rotating handle 31 is rotated to a lock location, the clamping groove 311 of the rotating handle 31 is clamped to the lock shaft 32, so as to prevent the enclosure 2 detaching from the base plate 11.

In the fiber optic closure provided in this embodiment of this application, because the lock assembly 3 uses a structure including the rotating handle 31 and the lock shaft 32, when the fiber optic closure needs to be opened, it is only necessary to rotate the rotating handle 31 along an opening direction. In a rotating process of the rotating handle 31, the clamping groove 311 of the rotating handle 31 is detached from the lock shaft 32 to implement unlocking, and then the mounting support 1 is detached from the enclosure 2. When the fiber optic closure needs to be closed, the mounting substrate 12 of the mounting support 1 is first inserted into the accommodation cavity of the enclosure 2 through the opening 21 of the enclosure 2, then the base plate 11 is snapped to fit the opening 21 of the enclosure 2, and the rotating handle 31 is rotated along a closing direction, so that the clamping groove 311 of the rotating handle 31 is clamped to the lock shaft 32, so as to lock the mounting support 1 and the enclosure 2. In this embodiment of this application, the fiber optic closure has a simple structure and fewer parts, and an opening operation and a closing operation may be implemented by only rotating the rotating handle 31, without a need of any auxiliary tool. The operations are simple and construction efficiency is high.

The splice tray 13 is also referred to as an optical fiber splice tray, and is a tool configured to roll and hold a spare fiber core during optical fiber connection.

In an example, correspondingly, the rotating handle 31 may be hinged to the base plate 11, and the lock shaft 32 is fastened on the enclosure 2.

In an example, clamping force between the clamping groove 311 and the lock shaft 32 can prevent the enclosure 2 detaching from the base plate 11.

In an example, when the rotating handle 31 is rotated to the lock location, the clamping groove 311 and the lock shaft 32 are fastened through interference fitting.

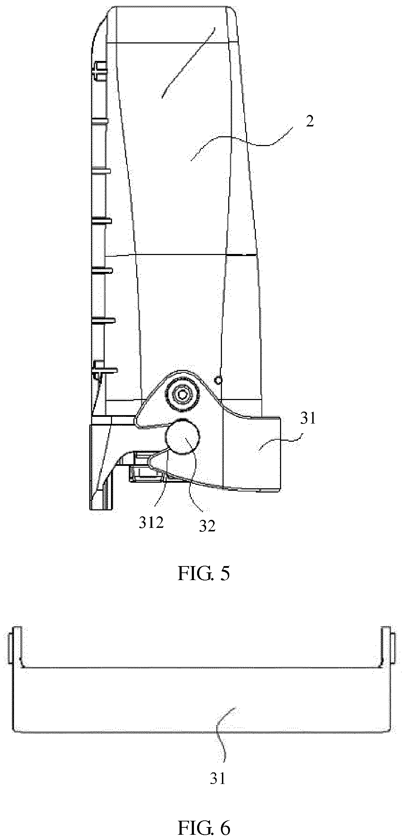

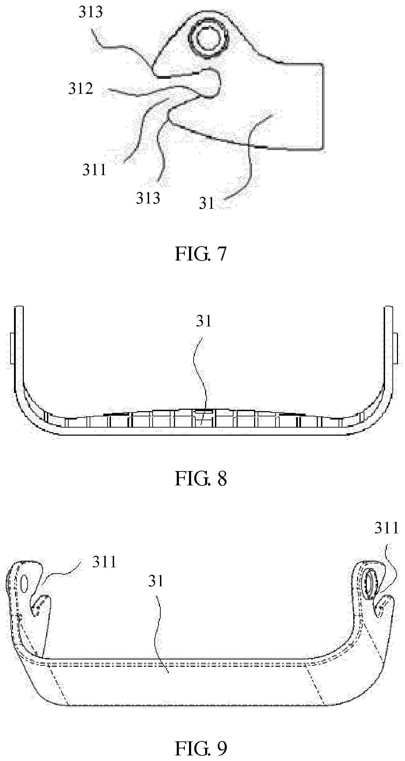

Affected by an external environment, the fiber optic closure may vibrate. To prevent the lock shaft 32 detaching from the clamping groove 311 when the fiber optic closure vibrates, in an example, a limiting structure may be disposed to limit the rotating handle 31. As shown in FIG. 7, the limiting structure may be a locating protrusion 312 disposed in the clamping groove 311. When the rotating handle 31 is at the lock location, the locating protrusion 312 is located between an opening of the clamping groove 311 and the lock shaft 32 (shown in FIG. 5), so as to prevent the lock shaft 32 detaching from the clamping groove 311. Therefore, it may be ensured that the lock shaft 32 and the clamping groove 311 are more stably fastened, so as to prevent the lock shaft 32 detaching from the clamping groove 311 when the fiber optic closure vibrates.

In some mounting states, a limiting structure may not be disposed, and a handle location is limited under weight of the rotating handle 31. Alternatively, while the limiting structure is disposed, a handle location is further limited under weight of the rotating handle 31. For example, the opening 21 of the enclosure 2 may face downward, the base plate 11 is snapped upward to fit the opening 21 of the enclosure 2, and the rotating handle 31 may be at a side part of the enclosure 2. After the rotating handle 31 is rotated downward a preset angle, the clamping groove 311 may fit the lock shaft 32. In this case, because the weight of the rotating handle 31 may apply downward torque to the rotating handle 31, fitting of the clamping groove 311 and the lock shaft 32 may be locked.

In the foregoing embodiment, to increase the downward torque of the rotating handle 31, a bobweight part may be disposed on the rotating handle 31, and weight of the bobweight part can apply downward torque to the rotating handle 31. Consequently, limiting force is stronger, and limitation is more reliable.

In an example, the rotating handle 31 may be further clamped to the base plate 11 or the enclosure 2, so as to limit the rotating handle 31.

To conveniently guide the lock shaft 32 to the clamping groove 311, as shown in FIG. 7, a smooth circular arc-shaped chamfer 313 may be formed at the opening of the clamping groove 311. Therefore, when the lock shaft 32 is in contact with the opening of the clamping groove 311, the circular arc-shaped chamfer 313 may smoothly guide the lock shaft 32 to the clamping groove 311, so as to reduce friction against the lock shaft 32. In addition, the opening of the clamping groove 311 may be further set as a flaring-shaped structure, so as to conveniently align the lock shaft 32 with the opening of the clamping groove 311.

The clamping groove 311 may have various structures, for example, may be an approximately linear groove shown in FIG. 7. The clamping groove 311 may be alternatively set as a circular arc-shaped groove, and a center of the circular arc-shaped groove may overlap a rotation center of the rotating handle 31, or the center of the circular arc-shaped groove and the rotation center of the rotating handle 31 may be staggered to form an eccentric structure. The lock shaft 32 is disposed on a rotating track of the opening of the clamping groove 311, rotating the rotating handle 31 may enable the lock shaft 32 to enter the clamping groove 311, and the groove with the eccentric structure may apply relatively large lock force to the lock shaft 32.

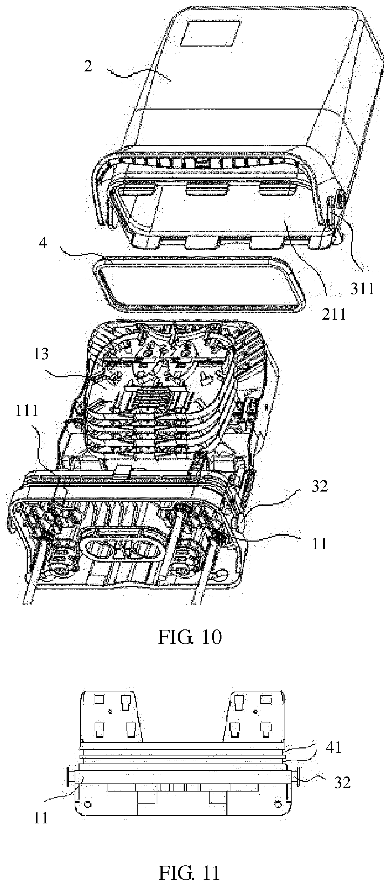

The base plate 11 and the enclosure 2 may be sealed in various manners. For example, an end face of the base plate 11 and an end face of the opening 21 of the enclosure 2 may be connected in a sealed manner. As shown in FIG. 10, a side wall 111 of the base plate 11 and an inner wall 211 at the opening 21 of the enclosure 2 may be connected in a sealed manner, so as to seal the opening 21 of the enclosure 2. Therefore, the side wall 111 of the base plate 11 and the opening 21 of the enclosure 2 may be sealed through interference fitting between the opening 21 of the enclosure 2 and the side wall of the base plate 11, so that sealing force is more evenly distributed.

To improve sealing of the fiber optic closure, as shown in FIG. 10, a sealing ring 4 may be disposed between the side wall 111 of the base plate 11 and the inner wall 211 at the opening 21 of the enclosure 2, and the sealing ring 4 is in sealed contact with the side wall 111 of the base plate 11 and the inner wall 211 at the opening 21 of the enclosure 2. Therefore, the opening 21 of the enclosure 2 and the side wall 111 of the base plate 11 may be more tightly sealed by disposing the sealing ring 4, so as to implement a relatively high protection level for the fiber optic closure and meet a relatively high protection requirement, so that the fiber optic closure can be used in a harsh environment such as a manhole. In an example, the sealing ring 4 is a closed ring. It may be understood that, the sealing ring 4 may be of another shape, provided that the opening 21 of the enclosure 2 and the side wall 111 of the base plate 11 can be sealed.

As shown in FIG. 11, to locate the sealing ring 4, a locating groove 41 for fastening the sealing ring 4 may be further disposed on the side wall 111 of the base plate 11. Therefore, the sealing ring 4 can be conveniently located, and the sealing ring 4 can be prevented from falling off because of squeeze in an opening process and a closing process of the fiber optic closure. Correspondingly, a locating groove for fastening the sealing ring 4 may be disposed on the inner wall 211 at the opening 21 of the enclosure 2. In an example, the locating groove 41 may be of a ring shape.

The rotating handle 31 may have a structure shown in FIG. 6 to FIG. 9. Two ends of the rotating handle 31 are respectively hinged to two sides of the enclosure 2, clamping grooves 311 are respectively disposed on the two ends of the rotating handle 31, two lock shafts 32 are respectively disposed at locations that are on the base plate 11 and that are corresponding to the two clamping grooves 311, and when the rotating handle 31 is rotated to the lock location, the clamping grooves 311 on the two ends of the rotating handle 31 are respectively clamped to the two lock shafts 32 in a one-to-one correspondence. Therefore, both the two ends of the rotating handle 31 may apply lock force, so that lock force between the mounting support 1 and the enclosure 2 is more evenly distributed, so as to avoid that sealing is not tight because force is applied to a local area.

When the base plate 11 is snapped to fit the enclosure 2, the base plate 11 may tilt due to an improper operation, and consequently, a location at which the base plate 11 is snapped to fit the enclosure 2 is incorrect, and sealing is not tight. To resolve the foregoing problem, a guiding assembly may be disposed between the base plate 11 and the enclosure 2, the guiding assembly includes a first guiding part and a second guiding part, the first guiding part is disposed on the opening end 21 of the enclosure 2, the second guiding part is disposed on an edge of the base plate 11, and when the first guiding part fits the second guiding part, the base plate 11 may be guided to snap and fit the opening 21 of the enclosure 2 in a sealed manner. Therefore, when the base plate 11 is snapped to fit the enclosure 2, the first guiding part may first fit the second guiding part, and then the base plate 11 is snapped to fit the enclosure 2 at the correct location with the guidance of the first guiding part and the second guiding part, so as to avoid that sealing is not tight because the base plate 11 tilts or is dislocated after snap-fitting is performed.

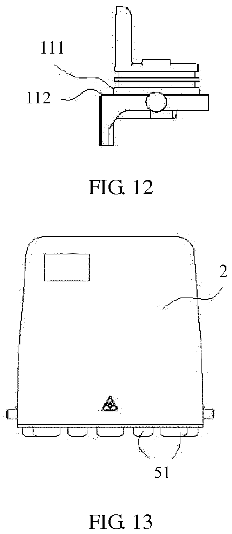

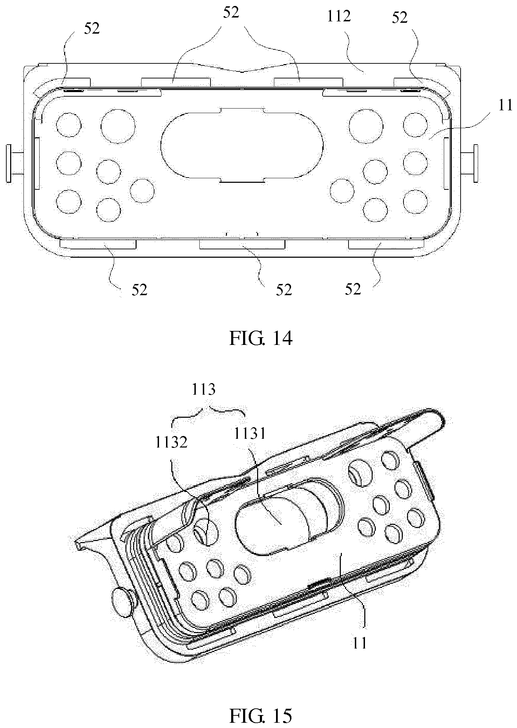

Specifically, as shown in FIG. 13 and FIG. 14, the first guiding part may be a guiding column 51, and the second guiding part may be a guiding opening 52. A location of the guiding column 51 is corresponding to that of the guiding opening 52, and both the guiding column 51 and the guiding opening 52 extend along a snap-fit direction of the base plate 11 and the enclosure 2. Correspondingly, the first guiding part may be the guiding opening 52, and the second guiding part may be the guiding column 51. Therefore, when the base plate 11 is snapped to fit the enclosure 2, the base plate 11 may be guided to a correct snap-fit location through fitting and plug-connection of the guiding column 51 and the guiding opening 52.

As shown in FIG. 13 and FIG. 14, a plurality of guiding columns 51 and a plurality of guiding openings 52 may be disposed, locations of the plurality of guiding columns 51 are in a one-to-one correspondence with locations of the plurality of guiding openings 52, the plurality of guiding columns 51 are evenly distributed on the inner wall 211 at the opening 21 of the enclosure 2, and the plurality of guiding openings 52 are evenly distributed on the edge of the base plate 11. Therefore, guiding force may be more evenly distributed, so that the base plate 11 is prevented from tilting in a guiding process, and a snap-fit process of the base plate 11 is more stable. In addition, after the base plate 11 is snapped to fit the enclosure 2, the guiding column 51 helps enhance strength of the opening 21 of the enclosure 2, so as to avoid deformation of the opening 21 of the enclosure 2.

As shown in FIG. 12 and FIG. 14, to limit a snap-fit location of the base plate 11, a flange 112 may be disposed on a periphery of the base plate 11. When the base plate 11 is snapped to fit the opening 21 of the enclosure 2, an end face of the opening end 21 of the enclosure 2 abuts against the flange 112. Therefore, the base plate 11 may be limited along a snap-fit direction, so as to avoid a case in which it is difficult to remove the base plate 11 because the base plate 11 is deeply inserted into the enclosure 2. The flange 112 and the base plate 11 may be integrated.

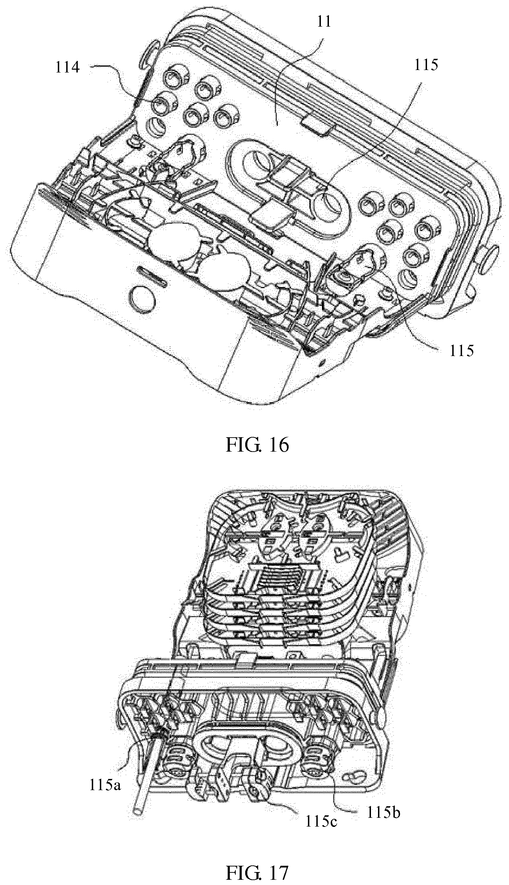

As shown in FIG. 15, an optical fiber connection hole 113 is disposed on the base plate 11, and the optical fiber connection hole 113 is configured to connect an optical fiber. As shown in FIG. 16, a detachable stopper 114 is disposed to seal an optical fiber connection hole 113 through which no optical fiber is connected. Therefore, an unused optical fiber connection hole 113 may be blocked, so as to prevent an external environment affecting an optical fiber connector and an optical fiber inside the fiber optic closure. When a new optical fiber needs to be connected, the optical fiber can be connected after the stopper 114 is detached.

The stopper 114 may be made of a plastic material or a rubber material, and an "O-shaped" sealing ring 4 is sleeved outside the stopper 114, so as to block the optical fiber connection hole 113, thereby implementing a waterproof effect.

As shown in FIG. 16, when an optical fiber is connected, a tool-less connector 115 may be inserted into the optical fiber connection hole 113. The tool-less connector is an apparatus accessory that can rapidly fasten and seal the optical fiber in the optical fiber connection hole of the base plate. Therefore, the optical fiber in the optical fiber connection hole 113 may be rapidly fastened and sealed, so as to facilitate operating and significantly improve construction efficiency. In addition, sealing reliability is substantially improved, and single cable management of the optical fiber is implemented, so that a later added optical fiber does not affect an in-service optical fiber. Specifically, as shown in FIG. 17, tool-less connectors 115 may be classified into three types by usage or diameter: a drop fiber tool-less connector 115a (applicable to an optical fiber with a diameter of 3 mm to 7 mm), a branching optical fiber tool-less connector 115b (applicable to an optical fiber with a diameter of 5 mm to 12 mm), and a straight-through optical fiber tool-less connector 115c (applicable to an optical fiber with a diameter of 6 mm to 12 mm).

Optical fiber connection holes 113 include an optical fiber connection hole 113 that can simultaneously accommodate two optical fibers, and an optical fiber connection hole 113 that can accommodate one optical fiber. The optical fiber connection hole 113 that can simultaneously accommodate two optical fibers may be configured to connect a straight-through optical fiber, and the optical fiber connection hole 113 that can accommodate one optical fiber may be configured to connect a branching optical fiber or a drop fiber.

In the foregoing implementation, the optical fiber connection hole 113 that can simultaneously accommodate two optical fibers may be an oval hole, a runway-shaped hole 1131 shown in FIG. 15, a rectangular hole, or the like. The optical fiber connection hole 113 that can accommodate one optical fiber may be a round hole 1132 shown in FIG. 15 or a square hole.

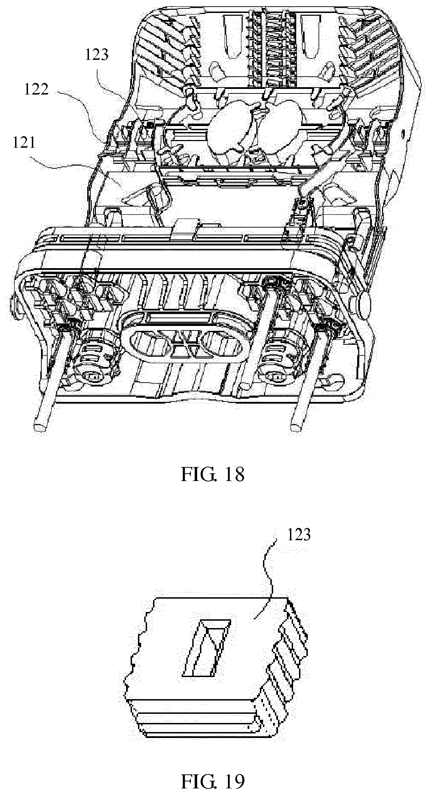

As shown in FIG. 18, the fusion splice plate 13 is disposed on a first surface 121 of the mounting substrate 12, an optical fiber guiding groove 122 is further disposed on the first surface 121 of the mounting substrate 12, and the optical fiber guiding groove 122 is configured to guide, to the splice tray 13, an optical fiber connected through the optical fiber connection hole 113. The optical fiber guiding groove 122 can guide the optical fiber to the splice tray 13 to perform a storage operation and a fusion splice operation. The optical fibers may be neatly arranged, so as to prevent a plurality of optical fibers intertwining.

To prevent the optical fiber in the optical fiber guiding groove 122 detaching from the groove, as shown in FIG. 18 and FIG. 19, an elastic lock block 123 may be disposed on the optical fiber guiding groove 122, and the elastic lock block 123 may tightly press and locate the optical fiber in the optical fiber guiding groove 122. For example, the elastic lock block 123 may be disposed on an initial part of the optical fiber guiding groove 122, that is, a part close to the optical fiber connection hole 113.

To locate and tightly press the elastic lock block 123, a mounting column is disposed at a location that is on the first surface 121 of the mounting substrate 12 and that is corresponding to the optical fiber guiding groove 122, a limiting inverse hook is disposed on the mounting column, and the elastic lock block 123 is sleeved on the mounting column and is located between the limiting inverse hook and the first surface 121 of the mounting substrate 12. Therefore, the elastic lock block 123 may be limited and pressure is applied to the elastic lock block 123, so that the elastic lock block 123 is deformed, thereby tightly pressing the optical fiber in the optical fiber guiding groove 122. A volume of the structure is small and the structure is easy to operate, and another mounting accessory for binding the optical fiber is not required, for example, a fiber-through ring.

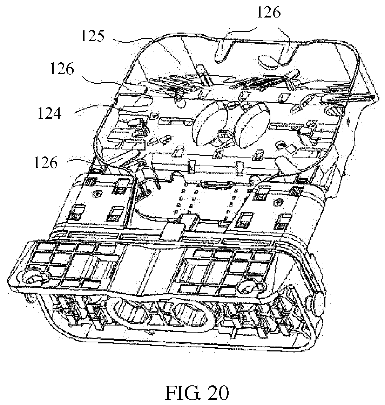

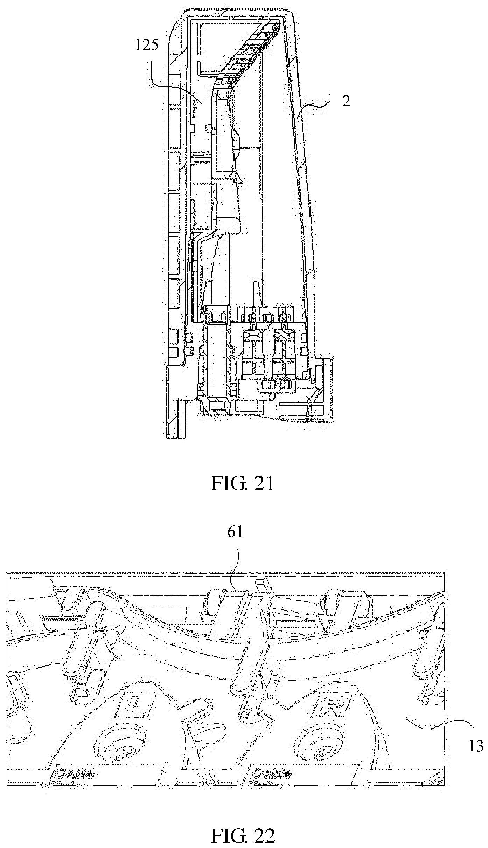

In a process of connecting an optical fiber, because a fusion splice operation does not need to be performed on the straight-through optical fiber, the straight-through optical fiber does not need to be laid to the splice tray 13. To facilitate storage of the straight-through optical fiber, as shown in FIG. 20 and FIG. 21, an optical fiber storage cavity 125 is disposed on a second surface 124 of the mounting substrate 12, a blocking tooth 126 for preventing an optical fiber falling off is disposed at an opening 21 of the optical fiber storage cavity, and the second surface 124 of the mounting substrate 12 is opposite to the surface that is of the mounting substrate 12 and on which the splice tray 13 is disposed. Therefore, the straight-through optical fiber may be stored in the optical fiber storage cavity 125, and because the optical fiber storage cavity 125 and the splice tray 13 are respectively disposed on two opposite surfaces of the mounting substrate 12, arrangement space may be saved.

The splice tray 13 may accommodate and manage an optical fiber that enters the splice tray 13, and protect a fiber splice point. To provide larger operating space for connecting the optical fiber to the splice tray 13, the splice tray 13 may be hinged to the mounting substrate 12, and the splice tray 13 is connected to a self-lock structure. When the splice tray 13 is rotated to a preset location, the self-lock structure may hold the splice tray 13 at the preset location. Therefore, construction operations may be simultaneously performed on two opposite surfaces of the splice tray 13.

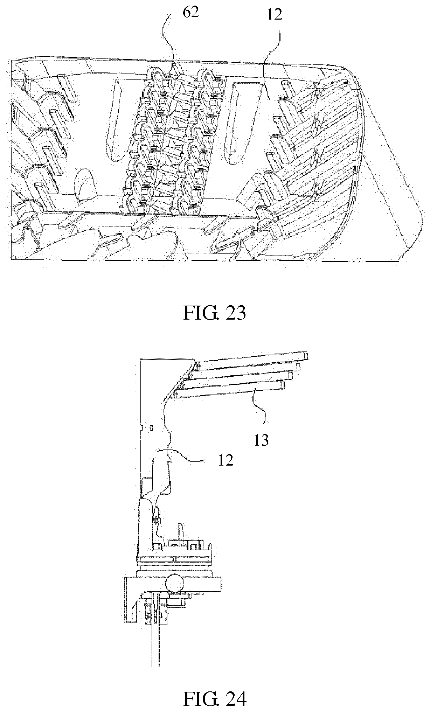

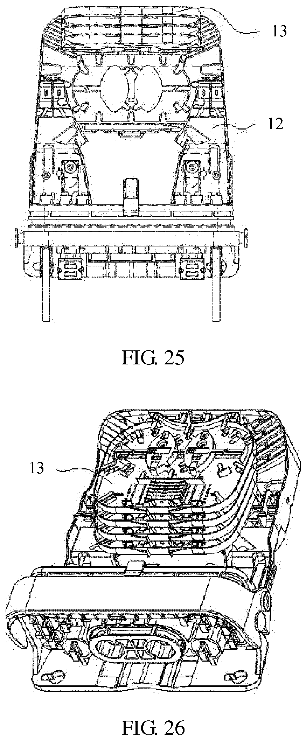

Specifically, as shown in FIG. 22 and FIG. 23, the self-lock structure may include a protrusion 61 disposed on a hinged shaft of the splice tray 13, and an elastic hook 62 disposed on the mounting substrate 12. When the splice tray 13 is rotated to the preset location, the protrusion 61 is clamped to the elastic hook 62, so as to apply holding force to the splice tray 13. The structure is simple and easy to implement. For example, as shown in FIG. 24 and FIG. 25, when the splice tray 13 is rotated to a location at which an included angle between the splice tray 13 and the mounting substrate 12 is 90°, the protrusion 61 may be clamped to the elastic hook 62, so as to lock the splice tray 13 at the location.

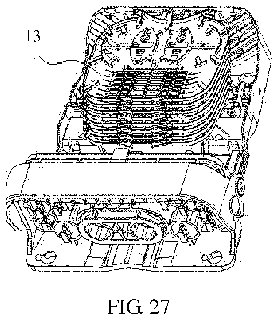

To save space, a plurality of splice trays 13 may be hinged to the first surface of the mounting substrate 12, and the plurality of splice trays 13 are stacked. On the premise that the space is unchanged, a quantity of disposed splice trays 13 may be changed by adjusting a thickness of the splice tray 13. For example, when the splice tray 13 is relatively thick, as shown in FIG. 26, four splice trays 13 may be hinged to the first surface of the mounting substrate 12. When the splice tray 13 is relatively thin, as shown in FIG. 27, eight splice trays 13 may be hinged to the first surface of the mounting substrate 12.

To ensure that the opening 21 of the enclosure 2 more tightly fits the side wall of the base plate 11, the side wall 111 of the base plate 11 fits the inner wall 211 at the opening 21 of the enclosure 2 through slope fitting. Because the handle may apply lock force to the lock shaft 32 along an insertion direction of the mounting substrate 12, slope fitting may convert a part of the lock force into sealing force perpendicular to a fitting surface, so that the opening 21 of the enclosure 2 more tightly fits the side wall of the base plate 11, and sufficient squeezing force can be applied to the sealing ring 4 when the sealing ring 4 is disposed.

The base plate 11 and the mounting substrate 12 may be integrated or detachably connected. When the base plate 11 and the mounting substrate 12 are integrated, it is difficult to detach the base plate 11 from the mounting substrate 12, and an overall structure is more stable. When the base plate 11 and the mounting substrate 12 are detachably connected, the base plate 11 may be easily replaced with a different model of base plate 11, so as to meet a different construction requirement.

The mounting substrate 12 and the base plate 11 may be perpendicular to each other, or an included angle between the mounting substrate 12 and the base plate 11 may be an acute angle. This is not limited herein.

According to a second aspect, this application provides a fiber optic network distribution system, including a branching optical fiber, a drop fiber, and a fiber optic closure according to any one of the foregoing technical solutions. The branching optical fiber and the drop fiber are connected by using an optical fiber connector, and the optical fiber connector is disposed in the fiber optic closure.

In the fiber optic network distribution system provided in this embodiment of this application, the optical fiber connector is placed into the fiber optic closure for protection, and the fiber optic closure can implement functions such as water-proofing and dust-proofing, resistance to impact of external force and pollution from liquid chemicals, and avoidance of ultraviolet radiation, so that the optical fiber connector can reliably work for a long time without being affected by an environment. In addition, opening and closing of the fiber optic closure may be implemented by only rotating a rotating handle of the fiber optic closure, without a need of any auxiliary tool. An operation is simple and construction efficiency is high.

The described specific features, structures, materials, or characteristics in this specification may be combined in a proper manner in any one or more of the embodiments or examples.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A fiber optic closure, comprising:
a mounting support, wherein the mounting support comprises a base plate and a mounting substrate fastened on a side of the base plate, and a splice tray is disposed on the mounting substrate;
an enclosure, wherein an accommodation cavity is formed in the enclosure, an opening is disposed on an end of the enclosure, the mounting substrate stretches into the accommodation cavity of the enclosure through the opening of the enclosure, and the base plate seals the opening of the enclosure; and
a lock assembly, wherein the lock assembly comprises a rotating handle and a lock shaft, and a clamping groove is disposed on the rotating handle; wherein
the rotating handle is hinged to the enclosure, and the lock shaft is fastened on the base plate; or the rotating handle is hinged to the base plate, and the lock shaft is fastened on the enclosure; and
when the rotating handle is rotated to a lock location, the clamping groove of the rotating handle is clamped to the lock shaft, so as to prevent the enclosure detaching from the base plate.

2. The fiber optic closure according to claim 1, wherein a locating protrusion is disposed in the clamping groove, and when the rotating handle is at the lock location, the locating protrusion is located between an opening of the clamping groove and the lock shaft, so as to prevent the lock shaft detaching from the clamping groove.

3. The fiber optic closure according to claim 1 or 2, wherein a side wall of the base plate and an inner wall at the opening of the enclosure are connected in a sealed manner, so as to seal the opening of the enclosure.

4. The fiber optic closure according to claim 3, wherein a sealing ring is disposed between the side wall of the base plate and the inner wall at the opening of the enclosure, and the sealing ring is in sealed contact with the side wall of the base plate and the inner wall at the opening of the enclosure.

5. The fiber optic closure according to claim 4, wherein a locating groove for fastening the sealing ring is disposed on the side wall of the base plate, or a locating groove for fastening the sealing ring is disposed on the inner wall at the opening of the enclosure.

6. The fiber optic closure according to any one of claims 1 to 5, wherein two ends of the rotating handle are respectively hinged to two sides of the enclosure, clamping grooves are respectively disposed on the two ends of the rotating handle, two lock shafts are respectively disposed at locations that are on the base plate and that are corresponding to the two clamping grooves, and when the rotating handle is rotated to the lock location, the clamping grooves on the two ends of the rotating handle are respectively clamped to the two lock shafts in a one-to-one correspondence.

7. The fiber optic closure according to any one of claims 1 to 6, wherein a guiding assembly is further disposed between the base plate and the enclosure, the guiding assembly comprises a first guiding part and a second guiding part, the first guiding part is disposed on the opening end of the enclosure, the second guiding part is disposed on an edge of the base plate, and when the first guiding part fits the second guiding part, the base plate may be guided to snap and fit the opening of the enclosure in a sealed manner.

8. The fiber optic closure according to claim 7, wherein the first guiding part is a guiding column, and the second guiding part is a guiding opening; or the first guiding part is a guiding opening, and the second guiding part is a guiding column; and
a location of the guiding column is corresponding to that of the guiding opening, and both the guiding column and the guiding opening extend along a snap-fit direction of the base plate and the enclosure.

9. The fiber optic closure according to any one of claims 1 to 8, wherein a flange is disposed on a periphery of the base plate, and an end face of the opening end of the enclosure abuts against the flange.

10. The fiber optic closure according to any one of claims 1 to 9, wherein the splice tray is disposed on a first surface of the mounting substrate, an optical fiber guiding groove is further disposed on the first surface of the mounting substrate, and the optical fiber guiding groove is configured to guide, an optical fiber connected through the optical fiber connection hole, to the splice tray.

11. The fiber optic closure according to claim 10, wherein an elastic lock block is disposed on the optical fiber guiding groove, and the elastic lock block is configured to tightly press and locate the optical fiber in the optical fiber guiding groove.

12. The fiber optic closure according to claim 11, wherein a mounting column is disposed at a location that is on the first surface of the mounting substrate and that is corresponding to the optical fiber guiding groove, a limiting inverse hook is disposed on the mounting column, and the elastic lock block is sleeved on the mounting column, and is located between the limiting inverse hook and the first surface of the mounting substrate.

13. The fiber optic closure according to any one of claims 1 to 12, wherein the splice tray is hinged to the mounting substrate, the splice tray is connected to a self-lock structure, and when the splice tray is rotated to a preset location, the self-lock structure may hold the splice tray at the preset location.

14. The fiber optic closure according to any one of claims 1 to 13, wherein the base plate and the mounting substrate are integrated, or the base plate and the mounting substrate are detachably connected.

15. A fiber optic network distribution system, comprising a branching optical fiber, a drop fiber, and a fiber optic closure, wherein the branching optical fiber and the drop fiber are connected by using an optical fiber connector, the optical fiber connector is disposed in the fiber optic closure, and the fiber optic closure is the fiber optic closure according to any one of claims 1 to 14.
